# EUROPÄISCHE PATENTSCHRIFT

(11) **EP 1 433 670 B1**
(45) Veröffentlichungstag und Bekanntmachung des Hinweises auf die Patenterteilung: **11.04.2007**
(21) Anmeldenummer: 03028273.5
(22) Anmeldetag: 10.12.2003
(51) Int. Cl.: B60R 21/26

(54) **Gasgenerator**
Gas generator
Générateur de gaz

(30) Priorität: 23.12.2002 DE 20219898 U
(43) Veröffentlichungstag der Anmeldung: 30.06.2004
(73) Patentinhaber: TRW Airbag Systems GmbH, 84544 Aschau am Inn (DE)
(72) Erfinder: Bierwirth, Sebastian, Dr., 83562 Rechtmehring (DE); Schwuchow, Karsten, 83512 Wasserburg (DE); Hofmann, Achim, Dr., 84570 Polling (DE)
(74) Vertreter: Kitzhofer, Thomas

(56) Entgegenhaltungen:
- EP-A- 0 578 478
- EP-A- 1 136 330
- US-A- 5 116 080
- US-B1- 6 314 888

## Beschreibung

Die Erfindung betrifft einen Gasgenerator, mit einem Gehäuse, das Ausströmöffnungen für ausströmendes Gas hat, und mit wenigstens einer zerstörbaren Verdämmfolie, die im nicht aktivierten Zustand des Gasgenerators wenigstens eine Ausströmöffnung feuchtedicht verschließt, wobei Ausströmöffnungen mit unterschiedlich dicker Verdämmfolie verschlossen sind.

Ein gattungsgemäßer Gasgenerator ist aus der DE 38 31 641 A1 bekannt. Die Verdämmfolie verschließt die Ausströmöffnungen über Jahre hinweg, um keine Feuchtigkeit an den Festtreibstoff gelangen zu lassen. Durch unterschiedlich dicke Verdämmfolie kann der Widerstand der Verdämmfolie beim Öffnen eingestellt und damit der Druck im Inneren des Gasgenerators in der Anfangsphase der Verbrennung variiert werden. Das Abbrandverhalten wird hierdurch verändert. Bei hohen Umgebungstemperaturen von über 75° C bis zu 90° C brennt Treibstoff wesentlich schneller ab als bei niedrigen Umgebungstemperaturen von beispielsweise unter -25° C. Um die Abbrandgeschwindigkeit über den gesamten Temperaturbereich von -40° C bis 90° C konstanter zu halten, ist angedacht worden, bei niedrigeren Temperaturen einige Ausströmöffnungen verschlossen zu halten und dadurch den Druck im Inneren des Gasgenerators zu erhöhen.

Die EP 0 578 478 A1 beschreibt einen Gasgenerator, bei dem verschiedene Ausströmöffnungen im Einbauzustand durch unterschiedlich dicke Verdämmfolien verschlossen sind, die entsprechend bei unterschiedlich hohem Druck im Gasgenerator bersten.

Aus der gattungsbildenden EP 1 136 330 A1 schließlich ist ein Gasgenerator bekannt, bei dem eine unterschiedliche Dicke der Verdämmfolien durch unterschiedlich dicke Aluminiumschichten erreicht wird, die mittels einer Klebeschicht im Bereich der Ausströmöffnungen befestigt sind und bei unterschiedlich hohem Innendruck die jeweilige Ausströmöffnung freigeben.

Die Erfindung schafft einen Gasgenerator, mit dem die Schwankungen des Brennkammerdrucks im oben genannten Temperaturbereich verringert werden.

Dies wird bei einem Gasgenerator der Eingangs genannten Art dadurch erreicht, dass die unterschiedliche Dicke der Verdämmfolie oder der mehreren Verdämmfolien durch wenigstens eine unterschiedlich dicke thermisch isolierende Folienschicht bewerkstelligt wird, welche auf einer Grundschicht wenigstens abschnittsweise aufgetragen ist, wobei die Folienschicht eine deutlich geringere Wärmeleitfähigkeit als die Grundschicht besitzt und auf der Seite der Verdämmfolie liegt, die der Gasströmung zugewandt ist. Beim erfindungsgemäßen Gasgenerator ist die Verdämmfolie oder sind die Verdämmfolien mehrschichtig ausgeführt. Mittels der thermisch isolierenden Folienschicht wird erreicht, dass die unter der Folienschicht liegende Grundschicht, die auch eine Art Trägerschicht ist, langsamer erwärmt wird und ihre Festigkeit langsamer verliert. Damit wird die Verdämmfolie im Bereich ihrer höheren Dicke zumindest später zerstört als im Bereich geringerer Dicke. Da die thermisch isolierende Schicht auf der Seite der Verdämmfolie liegt, die der Gasströmung zugewandt ist, wird von dieser Seite eine unmittelbare Anströmung der Grundschicht verhindert. Eine Zerstörung der Verdämmfolie im Bereich höherer Dicke muß jedoch nicht zwingend stattfinden, es ist sogar möglich, dass die Verdämmfolie bei niedrigen Umgebungstemperaturen in diesem Bereich überhaupt nicht zerstört wird, wodurch die zugeordnete Ausströmöffnung geschlossen bleibt.

Obwohl gemäß der bevorzugten Ausführungsform vorgesehen ist, dass eine Verdämmfolie verwendet wird, die mehrere Ausströmöffnungen oder sogar alle Ausströmöffnungen abdeckt und für verschiedene Ausströmöffnungen eine unterschiedliche Dicke in den entsprechenden Bereichen besitzt, ist es auch möglich, mehrere Verdämmfolien unterschiedlicher Dicke zu verwenden, um damit den oben genannten Zweck zu erreichen.

Die thermisch isolierende Folienschicht kann auch zumindest abschnittsweise weggelassen werden, d.h. ihre Dicke kann null sein. In diesem Bereicht wird dann die Grundschicht sehr schnell der erzeugten Wärme ausgesetzt und auch schneller zerstört als im Bereich mit der thermisch isolierenden Folienschicht.

Die thermisch isolierende Schicht ist insbesondere eine Kunststoffschicht, wogegen die Grundschicht vorzugsweise aus Metall ist.

Kunststoffe haben die Eigenschaft, dass ihre Festigkeit mit steigender Temperatur im Bereich von -40°C bis 90°C deutlich stärker abnimmt, als dies bei Metallen der Fall ist. Bei einer Verdämmung aus Kunststoff wird also der statische Öffnungsdruck im Temperaturbereich von -40°C bis 90°C abnehmen. Bei Aktivierung des Gasgenerators wird dieser Effekt noch verstärkt, da die größere Heftigkeit der Verbrennungsreaktion bei 90°C die Verdämmfolie schneller erwärmt als bei -40°C. Es ist deshalb durchaus sinnvoll, die ganze metallische Grundschicht zu beschichten, um den Öffnungsdruck der Verdämmfolie mit steigender Temperatur abzusenken. Der Effekt wird in Figur 3b an den Maxima der Brennkammerdrucke bei Raumtemperatur (RT) und 85°C deutlich. Das Maximum liegt bei Raumtemperatur sogar über dem von 85°C.

Es wäre also denkbar, dass die Grundschicht zwischen zwei thermisch isolierenden Folienschichten eingebettet ist, um eine Erwärmung von beiden Seiten zu verzögern.

Die Grundschicht ist aus fertigungstechnischen Gründen bevorzugt mit gleichbleibender Dicke ausgeführt.

Eine einfache Fertigung der Verdämmfolie kann dadurch erreicht werden, dass die thermisch isolierende Schicht einfach auf die Grundschicht aufgespritzt ist.

Wie bereits angedeutet weist die Verdämmfolie in einer bevorzugten Ausführungsform nur abschnittsweise die thermisch isolierende Folienschicht auf, um wenigstens eine ausgewählte Ausströmöffnung mit der zusätzlichen thermisch isolierenden Schicht und wenigstens eine ausgewählte Ausströmöffnung mit nur der Grundschicht abzudecken.

Wenigstens eine Verdämmfolie sollte so auf die Leistung des Gasgenerators abgestimmt sein, dass das erzeugte Gas bei einer Außentemperatur von größer 75° C, insbesondere etwa 85° C, alle Ausströmöffnungen freilegt.

Bei niedrigen Temperaturen, also bei einer Außentemperatur von kleiner -25° C, insbesondere kleiner -30° C, sollten nicht alle Ausströmöffnungen freigelegt werden, d.h. die Verdämmfolie wird in diesen Bereichen nicht zerstört.

Es kann aber auch angedacht werden, dass sogar bei niedrigen Temperaturen alle Ausströmöffnungen oder zumindest eine Ausströmöffnung, die mit der dickeren Verdämmfolie verschlossen sind, geöffnet werden. Jedoch kann dann durch die unterschiedlich dicke Verdämmfolie eine variable Zeitverzögerung bis zur Öffnung der zugeordneten Ausströmöffnung eingestellt werden. Hierbei sollte die mit dickerer Verdämmfolie verschlossene Ausströmöffnung bzw. Ausströmöffnungen bei einer Außentemperatur von kleiner -25° C mit einer Zeitverzögerung gegenüber der Ausströmöffnung mit dünner Verdämmfolie freigelegt werden, die mindestens um den Faktor vier größer ist als die Zeitverzögerung, die sich bei einer Außentemperatur von größer 75° C ergibt.

Weitere Merkmale und Vorteile der Erfindung ergeben sich aus der nachfolgenden Beschreibung und den nachfolgenden Zeichnungen, auf die Bezug genommen wird. In den Zeichnungen zeigen:
Fig. 1 eine Querschnittsansicht durch eine Ausführungsform des erfindungsgemäßen Gasgenerators,
Fig. 2 eine beim erfindungsgemäßen Gasgenerator einsetzbare Verdämmfolie,
Figuren 3a und 3b einen Brennkammerdruck- und Kannendruckverlauf eines mit einer herkömmlichen Verdämmfolie ausgestatteten Gasgenerators (Fig. 3a) im Vergleich zu dem Brennkammerdruck- und Kannendruckverlauf beim erfindungsgemäßen Gasgenerator (Fig. 3b) und
Fig. 4 eine zweite Ausführungsform einer einsetzbaren Verdämmfolie.

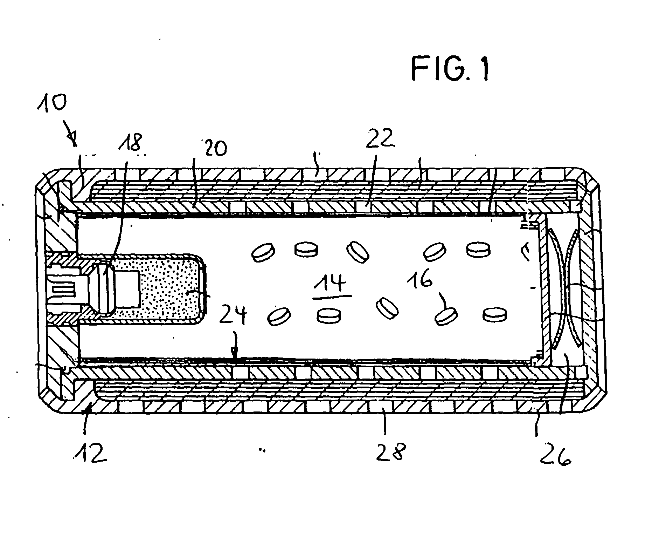

In Fig. 1 ist ein Gasgenerator 10 dargestellt, der ein Gehäuse 12 besitzt, wobei das Gehäuse 12 Wände hat, die das Außengehäuse und das Innengehäuse definieren. Der Gasgenerator hat eine Brennkammer 14, die mit Festtreibstoff 16 gefüllt ist. Der Festtreibstoff 16 kann durch einen Zünder 18 gezündet werden. Ein Abschnitt des Gehäuses 12 definiert die Brennkammer 14, dieser Abschnitt wird Brennkammerwand 20 genannt. Die Brennkammerwand 20 hat auf ihrem Umfang mehrere gleichmässig verteilte Ausströmöffnungen 22, die vorzugsweise alle gleichen Durchmesser besitzen. Auf die Innenseite der Brennkammerwand wird eine Verdämmfolie 24 aufgeklebt, die sämtliche Ausströmöffnungen 22 verschließt.

Das Gehäuse 12 hat darüber hinaus auch eine Außenwand 26, die ebenfalls mit Ausströmöffnungen 28 versehen ist. Auf der Innenseite der Außenwand 26 kann ebenfalls eine Verdämmfolie 24 vorgesehen sein, wobei diese Verdämmfolie 24 zusätzlich oder alternativ zu der auf der Innenseite der Brennkammerwand 20 anliegende Verdämmfolie 24 vorgesehen ist. Die Verdämmfolie 24 schützt vor Feuchteintritt in die Brennkammer 20.

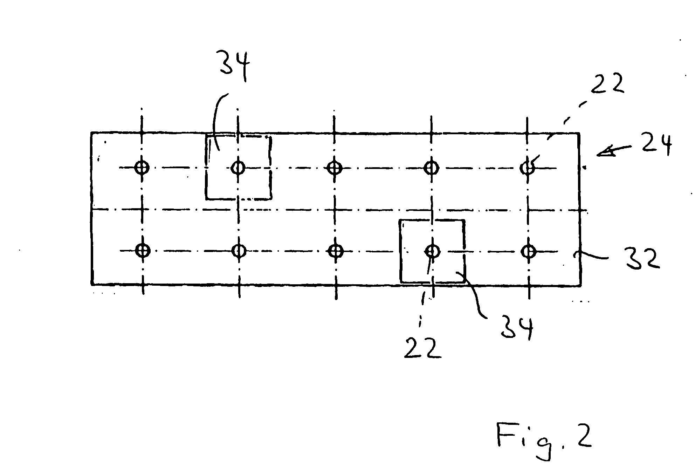

In Fig. 2 ist die Verdämmfolie 24 in ausgebreitetem Zustand dargestellt. Die Verdämmfolie 24 besteht aus mehreren Schichten, nämlich einer großflächigen Grundschicht 32 aus Metall und einer auf die Grundschicht aufgetragenen thermisch isolierenden Folienschicht 34 aus Kunststoff, die durch Spritzen auf die Grundschicht 32 aufgetragen wird. Wie Fig. 2 zu entnehmen ist, wird jedoch die Folienschicht 34 nur partiell auf die Grundschicht 32 aufgetragen. Die dargestellten Löcher 36 symbolisieren die Positionen der Ausströmöffnungen 22, die durch die Verdämmfolie 24 verschlossen werden. Die Grundschicht 32 und die Folienschicht 34 haben jeweils über ihre Ausdehnung eine gleichbleibende Dicke, so dass die gesamte Verdämmfolie 24 im Bereich der Folienschicht 34 die größte Dicke besitzt. Die Verdämmfolie 24 wird so an der Brennkammerwand 20 befestigt, dass die Folienschicht 34 unmittelbar dem Festtreibstoff 16 zugewandt ist.

Nach dem Zünden des Festtreibstoffs 16 wird dieser verbrannt, und es entsteht heißes Gas in der Brennkammer 14, das unmittelbar auf die Grundschicht 32 bzw., wo vorhanden, auf die Folienschicht 34 trifft. Die Wärmentwicklung verbunden mit der Druckentwicklung sorgt für ein abschnittsweises Zerstören der Verdämmfolie 24 im Bereich der Ausströmöffnungen 22.

Die einzelnen Schichten der Verdämmfolie 24 sind dabei so ausgebildet, dass bei einer Umgebungstemperatur des Gasgenerators (Temperatur des Gasgenerators vor der Zündung) von größer 75° C, insbesondere von etwa 85° C sämtliche Ausströmöffnungen 22 freigelegt werden, d.h. auch die Folienschicht 34 wird zerstört.

Bei niedrigen Außentemperaturen von kleiner -25° C, insbesondere kleiner -30° C isoliert die Folienschicht 34 den unter ihr liegenden Abschnitt der Grundschicht 32 so, dass die Verdämmfolie 24 in diesem Bereich entweder überhaupt nicht zerstört wird und die zugeordneten Ausströmöffnungen 22 damit verschlossen bleiben, oder diese Ausströmöffnungen würden mit einer deutlich größeren Zeitverzögerung gegenüber den nur durch die Grundschicht 32 abgedeckten Ausströmöffnungen 22 freigelegt als dies bei einer Außentemperatur von größer 75° C der Fall ist. Die Zeitverzögerung sollte hierbei um mindestens den Faktor vier größer sein als die Zeitverzögerung, die sich bei der Außentemperatur von größer 75° C ergibt.

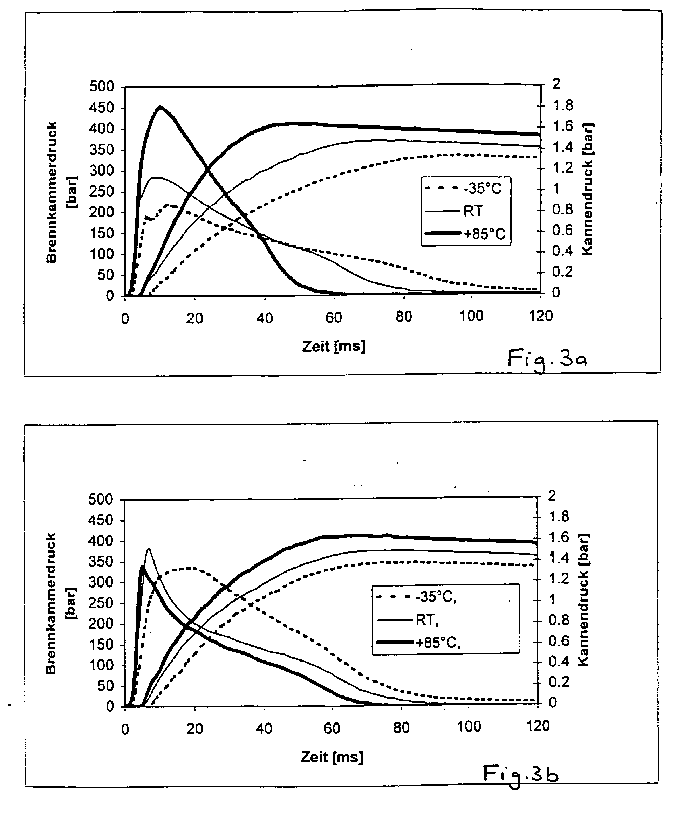

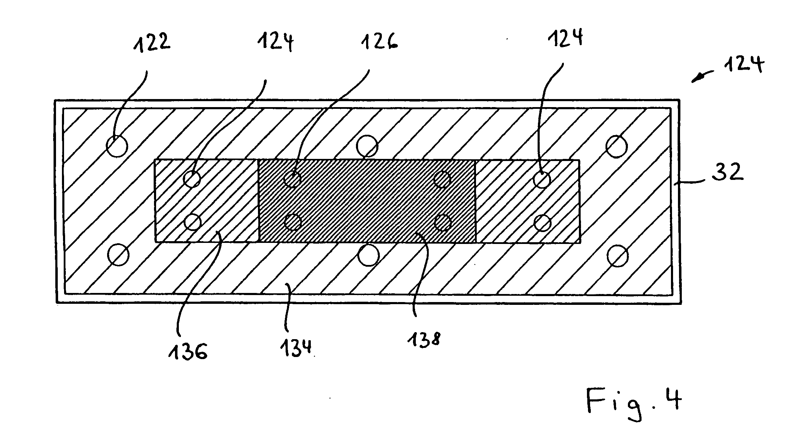

In Figur 4 ist der Aufbau einer zweiten Verdämmfolie 124 gezeigt, die eine metallische Grundschicht 32 hat, auf die drei Bereiche unterschiedlich dicker Verdämmfolie aufgebracht sind. Figur 3b zeigt die entsprechenden Brennkammer- und Kannendruckkurven mit dieser beschichteten Verdämmung im Vergleich zu einem Generator mit gleichbleibend dicker Metallfolie als Verdämmung (Figur 3a).

Die sechs größeren Öffnungen 122 sind mit dem dünnsten Folienschichtabschnitt 134 abgedeckt und öffnen in der ganzen Temperaturbandbreite von -40° bis +90°C. Bei 85°C öffnen zusätzlich sämtliche stärker abgedeckten acht kleineren Öffnungen 124 und 126. Bei 23°C werden nur die vier kleineren Öffnungen 124 freigelegt, in deren Bereich 136 die Folienschicht eine mittlere Dicke besitzt. Die Bohrungen 126 in einem Bereich 138, in dem die Folienschicht die größte Dicke hat, bleiben bei 23°C geschlossen.

Durch eine entsprechende Stufung der Schichtdicke der Folienschicht über alle kleinen Öffnungen 124, 126 wäre sogar auch eine Verfeinerung des Öffnungsverhaltens über den gesamten Temperaturbereich möglich.

Die Figuren 3a und 3b zeigen einen Vergleich eines Gasgenerators mit einer gleichmäßig dicken Metallfolie als Verdämmung (Figur 4a) und beim Einsatz der Verdämmung gemäß Figur 4. Der Brennkammerdruck als auch der sogenannte Kannendruck sind dargestellt. Der Kannendruck ist der Druck im Inneren eines genormt großen Metallbehälters, in dem im Labor der Gasgenerator gezündet wird und mit dem der Druck im Inneren eines Gassacks simuliert wird. Anhand des Vergleichs der Figuren 3a und 3b wird anschaulich, dass beim erfindungsgemäßen Gasgenerator der Brennkammerdruckverlauf weniger von der Außentemperatur abhängt als bei einem herkömmlichen. Darüber hinaus streut auch der Kannendruck weniger über den Temperaturbereich als bei einer gleichmäßig dicken Verdämmfolie. Um den Brennkammerdruck bei 85°C möglichst niedrig zu halten, sollte das Gehäuse mit der erfindungsgemäßen Verdämmfolie eine große Ausströmfläche besitzen, die größer sein kann als beim Gasgenerator, dessen Druckverlauf in Figur 3a zu sehen ist.

## Patentansprüche

1. Gasgenerator, mit
einem Gehäuse (12), das Ausströmöffnungen (22,28) für ausströmendes Gas hat, und mit
wenigstens einer zerstörbaren Verdämmfolie (24), die im nicht aktivierten Zustand des Gasgenerators (10) wenigstens eine Ausströmöffnung (22) feuchtedicht verschließt,
wobei Ausströmöffnungen (22) mit unterschiedlich dicker Verdämmfolie (24) verschlossen sind,
**dadurch gekennzeichnet, dass**
die unterschiedliche Dicke durch wenigstens eine unterschiedlich dicke thermisch isolierende Folienschicht (34) geschaffen ist, die über einer Grundschicht (32) liegt, wobei die thermisch isolierende Folienschicht (34) eine deutlich geringere Wärmeleitfähigkeit als die Grundschicht (32) besitzt und auf der Seite der Verdämmfolie (24) liegt, die der Gasströmung zugewandt ist.

2. Gasgenerator nach Anspruch 1, **dadurch gekennzeichnet, dass** die thermisch isolierende Folienschicht (34) eine Kunststoffschicht ist.

3. Gasgenerator nach einem der vorhergehenden Ansprüche, **dadurch gekennzeichnet, dass** die Grundschicht (32) aus Metall ist.

4. Gasgenerator nach einem der vorhergehenden Ansprüche, **dadurch gekennzeichnet, dass** die Grundschicht (32) eine gleichbleibende Dicke besitzt.

5. Gasgenerator nach einem der vorhergehenden Ansprüche, **dadurch gekennzeichnet, dass** die thermisch isolierende Folienschicht (34) auf die Grundschicht (32) aufgespritzt ist.

6. Gasgenerator nach einem der vorhergehenden Ansprüche, **dadurch gekennzeichnet, dass** eine Verdämmfolie (24) vorgesehen ist, die mehrere Ausströmöffnungen (22) abdeckt und für verschiedene Ausströmöffnungen (22) unterschiedlich dicke Bereiche aufweist.

7. Gasgenerator nach einem der vorhergehenden Ansprüche, **dadurch gekennzeichnet, dass** die Dicke der thermisch isolierenden Folienschicht (34) abschnittsweise null ist.

8. Gasgenerator nach Anspruch 7, **dadurch gekennzeichnet, dass** die Verdämmfolie (24) nur abschnittsweise die thermisch isolierende Folienschicht (34) aufweist, um wenigstens eine ausgewählte Ausströmöffnung (22) mit der zusätzlich thermisch isolierenden Folienschicht (34) und wenigstens eine ausgewählte Ausströmöffnung (22) mit der Grundschicht (32), ohne die Folienschicht (34) abzudecken.

9. Gasgenerator nach einem der vorhergehenden Ansprüche, **dadurch gekennzeichnet, dass** die Grundschicht (32) vorder- und rückseitig mit der Folienschicht (24) bedeckt ist.

10. Gasgenerator nach einem der vorhergehenden Ansprüche, **dadurch gekennzeichnet, dass** die wenigstens eine Verdämmfolie (24) so ausgebildet ist, dass das erzeugte Gas bei einer Außentemperatur von größer 75° C, insbesondere etwa 85° C, alle Ausströmöffnungen (22) freilegt.

11. Gasgenerator nach einem der vorhergehenden Ansprüche, **dadurch gekennzeichnet, dass** die wenigstens eine Verdämmfolie (24) so ausgebildet ist, dass das erzeugte Gas bei einer Außentemperatur von kleiner -25° C, insbesondere kleiner -30° C, nicht alle Ausströmöffnungen (22) freilegt.

12. Gasgenerator nach Anspruch 10, **dadurch gekennzeichnet, dass** die wenigstens eine Verdämmfolie (24) so ausgebildet ist, dass die mit dickerer Verdämmfolie (24) verschlossene Ausströmöffnung (22) bei einer Außentemperatur von kleiner -25° C mit einer Zeitverzögerung gegenüber der Ausströmöffnung (22), die mit dünnerer Verdämmfolie (24) verschlossen ist, freigelegt wird, die um mindestens den Faktor vier größer ist als die Zeitverzögerung, die sich bei einer Außentemperatur von größer 75 °C, insbesondere etwa 85 °C, ergibt.

## Claims

1. A gas generator comprising
a housing (12) which has outflow openings (22, 28) for outflowing gas, and
at least one destructible insulation foil (24) which in the non-activated state of the gas generator (10) closes at least one outflow opening (22) so as to be moisture-tight,
outflow openings (22) being closed with insulation foil (24) of varying thickness,
**characterized in that**
the varying thickness is provided by at least one thermally insulating foil layer (34) of varying thickness, which lies over a base layer (32), the thermally insulating foil layer (34) having a distinctly lower thermal conductivity than the base layer (32) and lying on the side of the insulation foil (24) which faces the gas flow.

2. The gas generator according to Claim 1, **characterized in that** the thermally insulating foil layer (34) is a plastic layer.

3. The gas generator according to either of the preceding claims, **characterized in that** the base layer (32) is made of metal.

4. The gas generator according to any of the preceding claims, **characterized in that** the base layer (32) has a uniform thickness.

5. The gas generator according to any of the preceding claims, **characterized in that** the thermally insulating foil layer (34) is applied onto the base layer (32) by spraying.

6. The gas generator according to any of the preceding claims, **characterized in that** an insulation foil (24) is provided which covers several outflow openings (22) and has regions of different thickness for different outflow openings (22).

7. The gas generator according to any of the preceding claims, **characterized in that** the thickness of the thermally insulating foil layer (34) is, in parts, zero.

8. The gas generator according to Claim 7, **characterized in that** the insulation foil (24) only partially has the thermally insulating foil layer (34), in order to cover at least one selected outflow opening (22) with the additionally thermally insulating foil layer (34) and to cover at least one selected outflow opening (22) with the base layer (32), without the foil layer (34).

9. The gas generator according to any of the preceding claims, **characterized in that** the base layer (32) is covered on the front and rear sides by the foil layer (24).

10. The gas generator according to any of the preceding claims, **characterized in that** the at least one insulation foil (24) is constructed such that at an outside temperature of greater than 75°C, in particular approximately 85°C, the generated gas opens all outflow openings (22).

11. The gas generator according to any of the preceding claims, **characterized in that** the at least one insulation foil (24) is constructed such that at an outside temperature of less than -25°C, in particular less than -30°C, the generated gas does not open all outflow openings (22).

12. The gas generator according to Claim 10, **characterized in that** the at least one insulation foil (24) is constructed such that at an outside temperature of less than -25°C, the outflow opening (22) which is closed by a thicker insulation foil (24), compared with the outflow opening (22) which is closed by a thinner insulation foil (24), is opened with a time delay which is greater by at least a factor of four than the time delay which results at an outside temperature of greater than 75°C, in particular approximately 85°C.

## Revendications

1. Générateur de gaz comprenant
un boîtier (12) ayant des orifices d'échappement (22, 28) pour le gaz qui s'échappe, et
au moins une feuille isolante (24) destructible qui, à l'état non activé du générateur de gaz (10), obture au moins un orifice d'échappement (22) de manière étanche à l'humidité,
des orifices d'échappement (22) étant obturés par une feuille isolante (24) présentant différentes épaisseurs,
**caractérisé en ce que**
les épaisseurs différentes sont réalisées par au moins une couche de feuille (34) thermiquement isolante qui présente différentes épaisseurs et qui est agencée sur une couche de base (32), la couche de feuille (34) thermiquement isolante possédant une conductibilité thermique nettement inférieure à celle de la couche de base (32) et étant agencée sur le côté de la feuille isolante (24) tourné vers le flux de gaz.

2. Générateur de gaz selon la revendication 1, **caractérisé en ce que** la couche de feuille (34) thermiquement isolante est une couche de matière plastique.

3. Générateur de gaz selon l'une des revendications précédentes, **caractérisé en ce que** la couche de base (32) est en métal.

4. Générateur de gaz selon l'une des revendications précédentes, **caractérisé en ce que** la couche de base (32) possède une épaisseur constante.

5. Générateur de gaz selon l'une des revendications précédentes, **caractérisé en ce que** la couche de feuille (34) thermiquement isolante est appliquée sur la couche de base (32) par injection.

6. Générateur de gaz selon l'une des revendications précédentes, **caractérisé en ce qu'**il est prévu une feuille isolante (24) recouvrant plusieurs orifices d'échappement (22) et présentant des régions d'épaisseur différente pour différents orifices d'échappement (22).

7. Générateur de gaz selon l'une des revendications précédentes, **caractérisé en ce que** sur certaines parties, l'épaisseur de la couche de feuille (34) thermiquement isolante est égale à zéro.

8. Générateur de gaz selon la revendication 7, **caractérisé en ce que** la feuille isolante (24) présente la couche de feuille (34) thermiquement isolante seulement sur certaines parties afin de recouvrir au moins un orifice d'échappement (22) sélectionné de la couche de feuille (34) additionnellement thermiquement isolante, et au moins un orifice d'échappement (22) sélectionné de la couche de base (32), sans la couche de feuille (34).

9. Générateur de gaz selon l'une des revendications précédentes, **caractérisé en ce que** la couche de base (32) est recouverte de la couche de feuille (24) sur le côté avant et sur le côté arrière.

10. Générateur de gaz selon l'une des revendications précédentes, **caractérisé en ce que** ladite au moins une feuille isolante (24) est réalisée de telle sorte qu'à une température extérieure de plus de 75°C, en particulier d'environ 85°C, le gaz produit dégage tous les orifices d'échappement (22).

11. Générateur de gaz selon l'une des revendications précédentes, **caractérisé en ce que** ladite au moins une feuille isolante (24) est réalisée de telle sorte qu'à une température extérieure de moins de - 25°C, en particulier de moins de - 30°C, le gaz produit ne dégage pas tous les orifices d'échappement (22).

12. Générateur de gaz selon la revendication 10, **caractérisé en ce que** ladite au moins une feuille isolante (24) est réalisée de telle sorte qu'à une température extérieure de moins de -25°C, l'orifice d'échappement (22) obturé par une feuille isolante (24) plus épaisse est dégagé, par rapport à l'orifice d'échappement (22) obturé par une feuille isolante (24) plus mince, avec un retard de temps supérieur au moins du facteur quatre au retard de temps obtenu à une température extérieure de plus de 75°C, en particulier d'environ 85°C.
